# EUROPÄISCHE PATENTSCHRIFT

(11) **EP 1 056 801 B1**
(45) Veröffentlichungstag und Bekanntmachung des Hinweises auf die Patenterteilung: **19.03.2003**
(21) Anmeldenummer: 98965112.0
(22) Anmeldetag: 12.12.1998
(51) Int. Cl.: C08J 11/04, B29B 17/02, B03B 9/06, B02C 18/44, C09C 1/48

(54) **VERFAHREN ZUR AUFBEREITUNG VON KRAFTFAHRZEUGREIFEN**
METHOD FOR PROCESSING AUTOMOBILE TIRES
PROCEDE POUR LE TRAITEMENT DE PNEUMATIQUES DE VEHICULES AUTOMOBILES

(30) Priorität: 29.12.1997 DE 19757794; 09.01.1998 DE 19800567
(43) Veröffentlichungstag der Anmeldung: 06.12.2000
(73) Patentinhaber: Gebrüder Lödige Maschinenbau-Gesellschaft mbH, 33050 Paderborn (DE)
(72) Erfinder: NUMRICH, Reiner, D-33178 Borchen (DE); TEWES, Gerhard, D-33178 Borchen (DE)
(74) Vertreter: Gille Hrabal Struck Neidlein Prop Roos
(86) Internationale Anmeldenummer: DE9803653
(87) Internationale Veröffentlichungsnummer: WO99033907

(56) Entgegenhaltungen:
- DE-A- 4 034 985
- DE-A- 4 416 155
- DE-A- 19 617 450
- US-A- 4 084 521
- US-A- 4 240 587
- US-A- 5 084 141
- US-A- 5 435 890
- US-A- 5 504 267
- PATENT ABSTRACTS OF JAPAN vol. 009, no. 287 (C-314), 14. November 1985 & JP 60 130678 A (MAMORU SANO), 12. Juli 1985

## Beschreibung

Die Erfindung betrifft ein Verfahren zur thermischen Aufbereitung von aus Altreifen hergestellten Produktstücken, die aus einem Materialverbund bestehen, der mindestens eine Materialkomponente aufweist, die sich bei Erwärmung zersetzt, indem die Produktstücke in einer Vorrichtung mechanisch bewegt und/oder fluidisiert und über erwärmte Kontaktflächen der Vorrichtung auf eine Materialzersetzungstemperatur erwärmt werden, bei der sich der Materialverbund in eine oder mehrere Feststoffmaterialkomponenten und Fluide zerlegt, die getrennt voneinander der Vorrichtung entnommen werden können,

Eine derartige Aufbereitung ist durch die US 4,084,521 bekannt geworden. Zunächst werden die Altreifen in Stücke geschnitten, die dann getrocknet werden. Anschließend gelangen die Stücke in einen Reaktionsbehälter in dem sie während des Transports vom Eingang zum Ausgang auf die Materialzersetzungstemperatur erhitzt werden. Der Reaktionsbehälter steht unter Unterdruck und ist luftdicht abgeschlossen. Die bei der Zersetzung entstehenden Gase und die nicht zersetzten Stücke gelangen dann in eine Kammer, in der sie getrennt entfernt werden.

In der US 4,240,587 ist ein Verfahren zur Verarbeitung von Altreifen und ähnlichen Materialien beschrieben. Die zugehörige Vorrichtung enthält eine Einrichtung zur Kühlung von Reifen verschiedener Größe auf eine Temperatur, bei der das Gummi spröde wird, so dass ein erster Anteii von wiederverwendbarem Gummi abgetrennt werden kann. Die Vorrichtung wird im wesentlichen mit den wiederverwendbaren Nebenprodukten der pyrolytischen Reduktion der Reifen, bei der Kohlenwasserstoffe, erwärmtes Gas und andere kommerziell verwertbare Nebenprodukte entstehen, betrieben.

DE 40 34 985 lehrt ein Verfahren zur gesteuerten Tieftemperaturentgasung vorzerkleinerter organischer Stoffe, vorzugsweise von Altreifen, Kunststoffen und Biomassen, mit dem Schwerpunkt auf der Gewinnung von Brenn- und Rohstoffen durch eine elektrisch beheizte Bandschnecke.

DE 196 17 450 betrifft ein Verfahren und eine Vorrichtung zur Rückgewinnung von Elastomeren aus Altmaterial. Dazu wird das Altmaterial durch eine erste Schleuse in eine Vorkammer zum Trocknen eingebracht, getrocknet in eine Retortenkammer mit verringertem Sauerstoffpartialdruck überführt und darin zur trockenen Destillation erhitzt. Das flüssige Destillat und der trockene Rückstand werden abgezogen. Der Rückstand gelangt in eine Nachkammer zur Zerkleinerung und Pulverisierung. Nicht pulverisierte oder granulatähnliche Rückstandsteile werden durch eine zweite Schleuse ausgeschleust.

Die mechanische Aufbereitung von nicht mehr zu verwendenden Kraftfahrzeugreifen ist beispielsweise durch die DE 44 16 155 A1 bekannt geworden.

Werden Altreifen Zerkleinerungsanlagen zugeführt, so hat sich gezeigt, dass bei Grob-Zerkleinerungsmaschinen und bei Mühlen ein großer Verschleiß auftritt und zusätzlichdie Durchsatzmenge pro Zeiteinheit begrenzt ist. Nach der Zerkleinerung, beziehungsweise der Mahlung, liegt ein Materialgemisch aus zahlreichen Komponenten vor, die separiert werden müssen, sofern eine sinnvolle Wiederverwertung angestrebt ist. Bei größeren Granulaten ist eine Separierung nicht möglich, weil die einzelnen Granulate aus einem innigen Materialverbund bestehen, der sich nicht mit einfachen Mitteln auftrennen läßt. Das heißt, die Granulate in unterschiedlichster Materialzusammensetzung können nur über eine chemische Aufbereitung in einzelne Materialkomponenten zerlegt werden.

Bei der chemischen Aufbereitung nach dem Stand der Technik werden die Altreifen, beziehungsweise Altreifenteile, im Wege der Pyrolyse und/oder Depolymerisation aufbereitet.

Die erwärmten und bearbeiteten Produktstücke können bei der thermischen Aufbereitung der Altreifen in der dafür vorgesehenen Vorrichtung an der Vorrichtungsinnenwandung und/oder an den Mischwerkzeugen dauerhaft anhaften oder festbacken. Es entstehen Verklebungen.

Die Aufgabe der Erfindung ist es deshalb, die bekannten Verfahren dahingehend weiterzubilden, dass keine derartigen Verklebungen entstehen können.

Zur Lösung der Aufgabe wird erfindungsgemäß vorgeschlagen, die Vorrichtung bei der thermischen Aufbereitung von Altreifen diskontinuierlich zu betreiben und die Produktstücke in eine Ruß enthaltende Materialvorlage im Vorrichtungsinnenraum einzubringen. Die Produktstücke werden mit Ruß gepudert und können nicht an der Vorrichtungsinnenwandung und/oder an den Mischwerkzeugen dauerhaft anhaften anhaften oder festbacken.

Die eine Hälfte des Ausgangsmaterials der zugeführten Produktstücke kann in Gase oder Öldämpfe umgewandelt werden. Die andere Hälfte des behandelten Ausgangsmaterials läßt sich in minderwertigen Ruß (Kohlenstoff, Schwefel) und Stahldrähte trennen. Die entstehenden Gase können zur Energieerzeugung genutzt werden. Das kondensierte, relativ homogene Öl ist als Rohstoff weiter verwendbar. Der einen hohen Kohlenstoff-Anteil aufweisende Ruß ist aufgrund seines Heizwertes zur Energieerzeugung einsetzbar. Der aus den KFZ-Reifen wiedergewonnene Stahl kann als Rohstoff wieder in einen Produktkreislauf integriert werden.

Die Materialvorlage kann aus Materialkomponenten bestehen, die sich bei der Zersetzung des Materialverbunds der Produktstücke ergeben. Das zugeführte Ausgangsmaterial wird bei dieser Ausführungsform beispielsweise mit noch warmem Ruß vermischt. Die Vorrichtung wird nicht zu stark abgekühlt. Das Ausgangsmaterial wird durch die Kontaktierung mit dem Ruß vorgewärmt.

In bevorzugter Ausgestaltung der Erfindung wird die Trennung der einzelnen Materialkomponenten durch eine Erwärmung der Produktstücke auf eine Temperatur von bis zu T = 500 °C erreicht.

Der Wirkungsgrad des Verfahrens läßt sich dadurch steigern, dass die thermische Aufbereitung der Produktstücke unter einem Vakuum in der Vorrichtung erfolgt.

Die Reinheit der erzeugten Endprodukte kann verbessert werden, wenn die thermische Aufbereitung der Produktstücke unter Ausschluß von Sauerstoff erfolgt.

Zur Durchführung der Aufbereitung wird erfindungsgemäß eine Vorrichtung verwendet, die in einem Vorrichtungsinnenraum vorgesehene Einbauten und Flächen zur mechanischen Fluidisierung und/oder Bewegung und thermischen Behandlung von Produktstücken aufweist, die aus Altreifen von beispielsweise Kraftfahrzeugen hergestellt sind, indem man die Altreifen zerkleinert, wobei die Produktstücke aus einem Materialverbund bestehen, der mindestens eine Materialkomponente aufweist, die sich bei Erwärmung zersetzt, mit beheizbaren Produktkontaktflächen der Vorrichtung zur Erwärmung der Produktstücke auf eine Materialzersetzungstemperatur, mit einem Anschluß oder Anschlüssen der Vorrichtung zur Aufrechterhaltung eines Vakuums im Vorrichtungsinnenraum, mit einem Anschluß oder Anschlüssen der Vorrichtung zur Einbringung der Produktstücke in den Vorrichtungsinnenraum, mit einem Anschluß oder Anschlüssen der Vorrichtung zur Einbringung eines Gases in den Produktinnenraum und mit einem Anschluß oder Anschlüssen der Vorrichtung zur Abführung eines Fluids oder von Fluiden und einer Feststoffkomponente oder von Feststoffkomponenten, die sich bei der thermischen Behandlung der Produktstücke ergeben.

Beispielsweise durch eine Kontaktbeheizung über die Vorrichtungsinnenwände sind die Produktstücke auf eine Temperatur von bis zu T = 500 °C aufheizbar.

Die Durchmischung und Zerkleinerung der Produktstücke ist durch Einbauten der Vorrichtung erreichbar, die in einem ortsfesten Gehäuse der Vorrichtung beweglich ausgebildet sind.

Die Einbauten von Mischelementen können bei einer Variante der Vorrichtung auf einer drehbaren Welle angeordnet sein, die in Stirnflächen der Vorrichtung gelagert ist, wobei die Welle die Vorrichtung durchsetzt und die Mischelemente die beheizten Flächen der Vorrichtung überstreichen.

Es versteht sich, dass das vorgenannte Verfahren und die dazugehörige Vorrichtung auch für die Verarbeitung thermisch zersetzbarer Gummi- und/oder Kunststoffabfälle aus der Kraftfahrzeug-Herstellung eingesetzt werden kann.

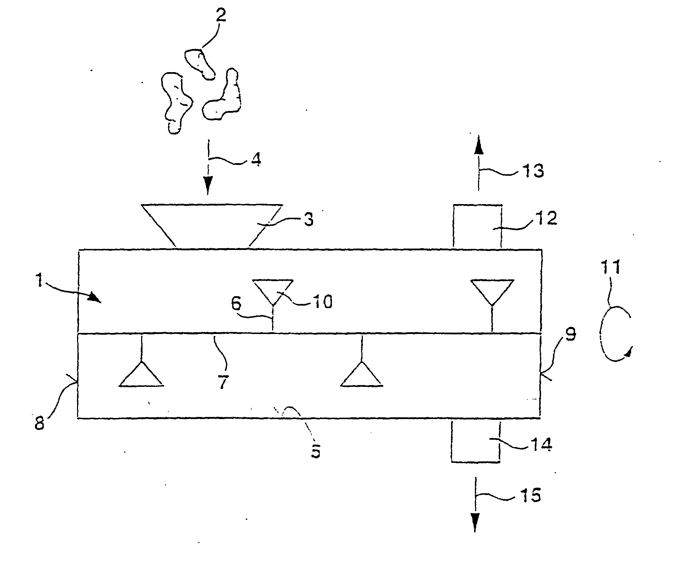

Weitere Merkmale und Vorteile der Erfindung ergeben sich aus der nachfolgenden Beschreibung eines Ausführungsbeispiels der Erfindung, anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein.

Die Figur zeigt eine Vorrichtung, durch deren Verwendung das erfindungsgemäße Verfahren durchführbar ist.

Die Erfindung ist in der Figur schematisch dargestellt, so dass die wesentlichen Merkmale der Erfindung gut zu erkennen sind. Die Darstellung ist nicht nctwendigerweise maßstäblich zu verstehen.

in einer diskontinuierlich betriebenen Vorrichtung 1 können aus Altreifen geshredderte Produktstücke 2 mit Hilfe einer thermischen Behandlung in verschiedene verwertbare Rohstoffe zerlegt werden. Die Produktstücke 2 könnten beispielsweise hinsichtlich ihrer Größe kontrolliert einem Produkteinlaß 3 der Vorrichtung 1 in Produkteinlaßrichtung 4 zugeführt werden. In der Regel werden die Produktstücke 2 aber gewogen und gewichtsdosiert der Vorrichtung 1 zugeführt. An die Vorrichtung 1 sind erste, in der Figur nicht gezeigte Zusatzaggregate anschließbar, über die die Produktstücke 2 gewichts dosiert und/oder hinsichtlich ihrer Größe kontrolliert in den Vorrichtungsinnenraum eingebracht werden. Die Vorrichtung 1 wird chargenweise ("Batch"-Betrieb) betrieben.

Nach dem Einfüllen der Produktstücke 2 wird der Vorrichtungsinnenraum der Vorrichtung 1 bis auf ein Grob-Vakuum evakuiert. Anschließend erfolgt eine schrittweise Aufheizung der Vorrichtung 1. Die Produktstücke 2 werden über den Kontakt mit einer elektrisch beheizten Vorrichtungsinnenwandung 5 erwärmt

innerhalb der Vorrichtung 1 sind Mischelemente 6 vorgesehen, die an einer Welle 7 befestigt sind. Die Welle 7 ist an Stirnseiten 8 und 9 der Vorrichtung 1 drehbar gelagert. Daher können die Mischelemente 6, die mit Mischwerkzeugen (Mischschaufeln) 10 versehen sind, in Drehrichtung 11 rotieren. Während der thermischen Aufbereitung der Produktstücke 2 werden die Mischelemente 6 im Froudezahlbereich zwischen Fᵣ = 1 und Fᵣ = 7 betrieben, wobei Fᵣ = (n/n_{c}) ² ist und sich n und n_{c} wie folgt ergibt n_{c} = kritische Drehzahl (1/s) und n = Drehzahl der Mischelemente (1/s) und Fᵣ = (m * ω² * r) / (m * g).

Während des Behandlungsvorgangs wird ein mechanisches Wirbelbett erzeugt, so dass möglichst viele Produktstücke 2 in Kontakt mit der beheizten Vorrichtungsinnenwandung 5 gelangen. Durch das mechanische Wirbelbett entsteht Ruß in Form eines feinen Mikrogranulats aus Kohlenstoff, das sich nicht in der kondensierten Ölphase löst und problemlos beispielsweise durch Zentrifugieren abgetrennt werden kann.

Spezielle Mischwerkzeuge 10 verhindern das Verknäuelung der freigelegten Stahlfäden aus den Produktstücken 2. Die Mischwerkzeuge 10 weisen runde Oberflächen auf, so dass die Stahlfäden abrutschen und sich nicht an den Oberflächen der Mischwerkzeuge 10 festsetzen können.

Beim Erreichen einer Temperatur von ca. 380 °C bis 420 °C innerhalb der Vorrichtung 1 treten Zersetzungsprozesse ein. Bei konstanter Temperaturbeibehaltung können Gase, Fluide und Dämpfe über einen Gasauslaß 12 in Auslaßrichtung 13 abgeführt werden. Gleichzeitig steigt die Produkttemperatur der Produktstücke 2 an. Beim Erreichen einer Temperaturobergrenze, die durch einen oder mehrere in der Vorrichtung 1 vorgesehene. Temperaturfühler erfaßbar ist, wird die thermische Behandlung gestoppt. Die Vorrichtung 1 wird mit Stickstoff geflutet, so dass das Vakuum durch Einstellung des Umgebungsdrucks aufgegeben wird.

Die bei der thermischen Aufbereitung der Produktstücke 2 entstehenden Materialkomponenten lassen sich gewichtsdosiert aus der Vorrichtung 1 über einen Rohstoffauslaß 14 in Auslaßrichtung 15 entnehmen. An der Vorrichtung 1 können zweite Zusatzaggregate vorgesehen sein, über die Materialkomponenten aus dem Vorrichtungsinnenraum gewichtsdosiert (Wiegezellen) abgezogen werden können, die bei der thermischen Behandlung der Produktstücke 2 entstehen.

Nach Beendigung der thermischen Behandlung einer ersten Charge von Produktstücken 2 wird die Vorrichtung 1 nur teilweise entleert. Neue Produktstücke 2 werden beim Befüllen mit noch warmem Ruß vermischt. Die Vorrichtung 2 kühlt nichtzu stark ab. Die neuen Produktstücke 2 werden durch den Kontakt mit dem Ruß vorgewärmt.

Die Produktstücke 2 werden mit Ruß gepudert und können nicht an der Vorrichtungsinnenwandung 5 und/oder an den Mischwerkzeugen 10 dauerhaft anhaften anhaften oder festbacken. Verklebungen werden vermieden. Eine gute Trennung in die einzelnen Rohstoffe wird ermöglicht. Alternativ kann bei einer ersten Betriebsweise Kohlenstoff in Staubform in den Vorrichtungsinnenraum vorgelegt werden, damit die Produktstücke_2 beim Erwärmen mit dem Kohlenstoff vermischt werden.

Auch die Vorrichtung könnte bei einem anderen Ausführungsbeispiel während der thermischen Aufbereitung der Produktstücke im Froudezahlbereich zwischen Fᵣ = 1 und Fᵣ = 7 betrieben werden, beispielsweise indem die Vorrichtung als rotierbare Trommel ausgebildet ist

## Patentansprüche

1. Thermische Aufbereitung von aus Altreifen hergestellten Produktstücken, die aus einem Materialverbund bestehen, der mindestens eine Materialkomponente aufweist, die sich bei Erwärmung zersetzt, indem die Produktstücke in einer Vorrichtung mechanisch bewegt und/oder fluidisiert und über erwärmte Kontaktflächen der Vorrichtung auf eine Materialzersetzungstemperatur erwärmt werden, bei der sich der Materialverbund in eine oder mehrere Feststoffmaterialkomponenten und Fluide zerlegt, die getrennt voneinander der Vorrichtung entnommen werden können, **dadurch gekennzeichnet, dass** die Vorrichtung diskontinuierlich betrieben wird und dass die Produktstücke in eine Ruß enthaltende Materialvorlage im Vorrichtungsinnenraum eingebracht werden.

2. Verfahren nach Anspruch 1, **dadurch gekennzeichnet, dass** die Materialvorlage aus Materialkomponenten besteht, die sich bei der Zersetzung des Materialverbunds der Produktstücke ergeben.

3. Verfahren nach Anspruch 1, **dadurch gekennzeichnet, dass** die Produktstücke auf eine Temperatur von bis zu T = 500 °C erwärmt werden.

4. Verfahren nach einem der vorhergehenden Ansprüche, **dadurch gekennzeichnet, dass** die thermische Aufbereitung der Produktstücke unter einem Vakuum in der Vorrichtung erfolgt.

5. Verfahren nach einem der vorhergehenden Ansprüche, **dadurch gekennzeichnet, dass** die thermische Aufbereitung der Produktstücke unter Ausschluss von Sauerstoff erfolgt.

## Claims

1. The thermal processing of product fragments made from recycled tyres, which consist of a composite material comprising at least one material component, which decomposes on heating, wherein the product fragments are mechanically moved and/or fluidised in a device and are heated via heated contact surfaces of the device to a material-decomposition temperature, at which the composite material decomposes into one or more solid material components and fluids, which can be removed from the device separately from one another, **characterised in that** the device is operated discontinuously and that the product fragments are introduced into a soot-containing material receiver in the interior space of the device.

2. Method according to claim 1, **characterised in that** the material receiver consists of material components obtained on the decomposition of the composite material of the product fragments.

3. Method according to claim 1, **characterised in that** the product fragments are heated to a temperature up to T = 500°C.

4. Method according to any one of the preceding claims, **characterised in that** the thermal processing of the product fragments takes place in the device under a vacuum.

5. Method according to any one of the preceding claims, **characterised in that** the thermal processing of the product fragments takes place with the exclusion of oxygen.

## Revendications

1. Traitement thermique de fragments de produit fabriqués à partir de vieux pneumatiques, qui sont constitués d'un composite de matériaux, qui présente au moins un composant qui se décompose à la chaleur, selon lequel on déplace et/ou on fluidise mécaniquement dans un appareil les fragments de produit et on les chauffe sur des surfaces de contact chauffées de l'appareil à une température de décomposition des matériaux, à laquelle le composite est décomposé en un ou plusieurs composants solides et fluides, qui peuvent être retirés séparément de l'appareil, **caractérisé en ce que** l'appareil est exploité en discontinu et **en ce que** les fragments de produit sont introduits dans une pré-couche de matériau contenant de la suie dans l'espace intérieur de l'appareil.

2. Procédé selon la revendication 1, **caractérisé en ce que** la pré-couche de matériau est constituée de composants qui apparaissent lors de la décomposition du composite des fragments de produit.

3. Procédé selon la revendication 1, **caractérisé en ce que** les fragments de produit sont chauffés à une température allant jusqu'à T = 500°C.

4. Procédé selon l'une quelconque des revendications précédentes, **caractérisé en ce que** le traitement thermique des fragments de produit se fait sous vide dans l'appareil.

5. Procédé selon l'une quelconque des revendications précédentes, **caractérisé en ce que** le traitement thermique des fragments de produit se fait en l'absence d'oxygène.
